(19) Europäisches Patentamt
European Patent Office
Office européen des brevets

(11) **EP 1 378 413 B1**

(12) **FASCICULE DE BREVET EUROPEEN**

(45) Date de publication et mention
de la délivrance du brevet:
**14.09.2011 Bulletin 2011/37**

(51) Int Cl.:
***B60T 13/18*** *(2006.01)*    ***B60T 13/20*** *(2006.01)*
***B60T 13/16*** *(2006.01)*    ***B60T 8/40*** *(2006.01)*
***B60T 7/04*** *(2006.01)*

(21) Numéro de dépôt: **03014381.2**

(22) Date de dépôt: **26.06.2003**

(54) **Dispositif d'assistance de freinage**

Bremskraftverstärker

Brake booster

(84) Etats contractants désignés:
**AT BE BG CH CY CZ DE DK EE ES FI FR GB GR
HU IE IT LI LU MC NL PT RO SE SI SK TR**

(30) Priorité: **04.07.2002 FR 0208403**

(43) Date de publication de la demande:
**07.01.2004 Bulletin 2004/02**

(73) Titulaire: **ROBERT BOSCH GMBH
70442 Stuttgart (DE)**

(72) Inventeur: **Richard, Philippe
77550 Chelles (FR)**

(74) Mandataire: **Hurwic, Aleksander Wiktor
Bosch Systemes de Freinage
Service Brevets
126, rue de Stalingrad
93700 Drancy (FR)**

(56) Documents cités:
**EP-A- 0 389 993      DE-A- 3 600 729
DE-A- 4 420 148      DE-A- 4 430 168
DE-A- 19 632 130**

EP 1 378 413 B1

**Description**

La présente invention a pour objet un dispositif d'assistance de freinage. Il est plus particulièrement destiné à être mis en place dans un véhicule, notamment un véhicule de type berline ou utilitaire. L'invention a pour but de remédier à des problèmes d'encombrement et de complexité de fabrication.

Dans le domaine automobile, on connaît des dispositifs d'assistance de freinage, notamment de type pneumatique ou de type électro-hydraulique. Les premiers dispositifs d'assistance pneumatique comportent en pratique un servofrein pneumatique, muni d'une chambre avant à volume variable séparée d'une chambre arrière également à volume variable par une cloison formée par une membrane étanche et souple et par une plaque-jupe rigide. La jupe rigide entraîne un piston pneumatique prenant appui, par l'intermédiaire d'une tige de poussée, sur un piston primaire d'un maître cylindre d'un circuit hydraulique de freinage, typiquement un maître cylindre tandem. La chambre avant placée du côté du maître cylindre est reliée pneumatiquement à une source de fluide. La chambre arrière, opposée à la chambre avant, est placée du côté d'une pédale de frein, et est reliée pneumatiquement, de manière contrôlée par une valve, à une source de fluide propulseur typiquement de l'air sous pression atmosphérique. Au repos, c'est-à-dire lorsqu'un conducteur n'appuie pas sur la pédale de frein, les chambres avant et arrière sont connectées entre elles alors que la chambre arrière est isolée par rapport à la pression atmosphérique. Lors du freinage, on isole tout d'abord la chambre avant par rapport à la chambre arrière, puis on admet de l'air dans la chambre arrière. Cette admission d'air a pour effet de propulser la cloison et de mettre en oeuvre l'assistance de freinage pneumatique.

L'inconvénient présenté par ce type d'assistance pneumatique se situe dans le rapport volumique de l'effort d'assistance. En effet, la force d'assistance étant procurée par l'air à la pression ambiante, peu élevée, le servomoteur doit avoir une dimension suffisamment grande pour que l'effort d'assistance soit important Quand, pour des raisons d'encombrement, il n'est pas possible de réaliser des chambres avec des volumes suffisants, on peut prévoir d'en réaliser plusieurs en cascade. Ces réalisations s'effectuent cependant dans tous les cas au détriment de l'encombrement dans le compartiment moteur du véhicule.

Il est par ailleurs connu des assistances de freinage électro-hydraulique. Typiquement, un moteur électrique est relié à une pompe hydraulique qui injecte un liquide hydraulique sous pression dans les circuits de freinage, en aval du maître cylindre, au moment où ceux-ci sont sollicités. Le contrôle de ce moteur électrique est réalisé par une mesure des pressions régnant dans les chambres avant et arrière du servofrein pneumatique. On utilise donc deux détecteurs de pression, raccordés pneumatiquement à chacune des chambres pour en mesurer la pression. Ces détecteurs fournissent des signaux électriques représentatifs de ces pressions. Une telle solution présente de nombreux inconvénients.

D'abord, la mesure des pressions dans les chambres avant et arrière est une mesure d'un phénomène pneumatique et nécessite la présence d'un capteur dont la mise en place, et la mise au contact du fluide dont la pression est à mesurer, peut présenter certaines difficultés. Par ailleurs, la fonction de transfert de circuits de calcul délivrant un signal de commande du moteur électrique, en fonction des mesures des pressions délivrées par ces deux capteurs peut présenter certaines instabilités conduisant à des instabilités de l'assistance électro-hydraulique asservie. En outre, les pompes d'assistance utilisées doivent alors être des pompes haute pression, capables d'un débit variable et, en pratique, nécessitent d'être mues par des moteurs à puissance importante, typiquement 1 kilowatt. Même pour un véhicule avec un moteur thermique puissant, de 100 kilowatts par exemple, rien que cette assistance représente 1% de la puissance fournie par le moteur. C'est trop.

Technologiquement, les pompes fournissent une pression élevée, et un diaphragme, commandé en fonction des mesures des pressions, permet d'injecter un liquide hydraulique sous pression dans le circuit de frein en haute pression. L'ouverture et la fermeture de ces diaphragmes posent par ailleurs des problèmes de bruit et des problèmes de difficultés de pilotage précis. Un dispositif d'assistance selon le préambule de la revendication 1 est connu du DE-A-196 32 130.

Dans l'invention, on a voulu résoudre ces problèmes d'encombrement, de consommation énergétique, et de difficulté de commande par une conception totalement nouvelle du circuit d'assistance de freinage. Le circuit d'assistance de freinage de l'invention peut par ailleurs être couplé, mais ce n'est pas une obligation, avec un circuit d'assistance pneumatique, voire avec un circuit d'assistance électro-hydraulique. Le principe de l'invention comporte la mise en place d'une chambre de pression, en amont d'un maître cylindre, entre un réservoir de liquide hydraulique et ce maître cylindre. La chambre de pression est soumise à une pression hydraulique par une injection de liquide hydraulique effectuée par une pompe menée par un moteur, notamment à courant continu. La pression régnant dans cette chambre de pression sert alors à déplacer le piston primaire du maître cylindre. On montrera par ailleurs une relation simple entre la pression régnant dans la chambre de pression, un couple exercé par le moteur à courant continu et un courant qui traverse ce dernier.

La chambre de pression située en amont du maître cylindre met en oeuvre ce dernier mécaniquement ou hydrauliquement. Le reste du circuit de freinage, en aval, peut être inchangé. On peut montrer qu'en agissant ainsi, d'une part le rendement massique, ou le rendement volumique de l'assistance est bien supérieur au rendement obtenu avec une assistance de type pneumatique. D'autre part, l'injection se réalise dans une chambre en amont du maître cylindre, à pression plus basse.

L'invention a donc pour objet un dispositif d'assistance de freinage comportant un réservoir de liquide hydraulique, un maître cylindre, un conduit d'alimentation reliant le maître cylindre au réservoir, et une tige de commande pour exercer un effort de compression du liquide hydraulique dans le maître cylindre, une chambre de pression, en amont du maître cylindre pour un écoulement du liquide hydraulique du réservoir vers des freins d'un véhicule, une pompe hydraulique interposée dans le conduit entre le réservoir et la chambre de pression, un moteur électrique d'entraînement de la pompe hydraulique et des moyens pour commander la pompe en fonction d'un effort exercé sur la tige de commande, caractérisé en ce que les moyens pour commander la pression de la pompe comportent un capteur pour mesurer l'effort exercé sur la tige de commande, un capteur pour mesurer l'action de la pompe, et un asservissement pour asservir l'action de la pompe à l'effort exercé sur la tige de commande et en ce que ledit asservissement génère un courant censé circuler dans le moteur qui est une fonction $\alpha f^{-1}$ de l'effort exercé par le pied du conducteur sur une pédale (5), $f^{-1}$ étant une fonction liant l'intensité du courant du moteur $I_{moteur}$ à la pression $P_{chambre}$ de la chambre de pression.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :

- Figure 1 : une représentation schématique du dispositif d'assistance de freinage, selon l'invention ;
- Figure 2 : des représentations de diagrammes de correspondance d'un courant circulant dans un moteur à courant continu, de la puissance disponible avec ce moteur, et du rendement en correspondance de la pompe, en fonction du couple exercé par l'arbre du moteur sur la pompe.

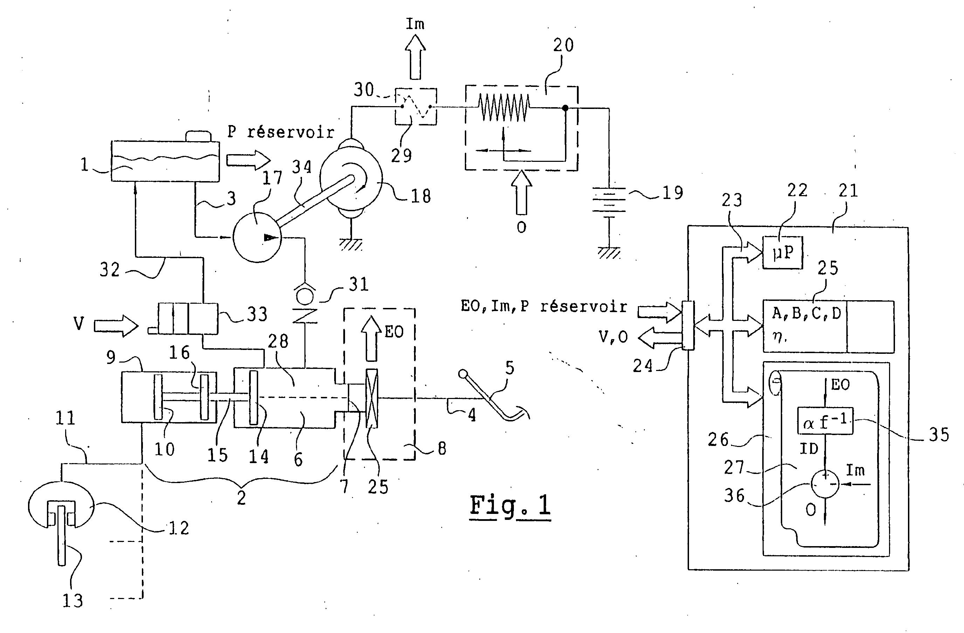

La figure 1 montre un dispositif d'assistance de freinage selon l'invention. Ce dispositif comporte un réservoir 1 de liquide hydraulique, un maître cylindre 2 et un conduit d'alimentation 3 pour relier le maître cylindre 2 au réservoir 1. Une tige de commande 4, par exemple reliée à une pédale de frein 5 d'un véhicule non représenté, sert à exercer un effort de compression du liquide hydraulique, ici dans une chambre de pression 6 du maître cylindre. Cet effort de compression est schématisé ici par la présence d'un piston 7 mené par la tige 4 et se déplaçant dans un alésage réalisé dans la chambre 6. Dans l'état de la technique, la transmission de l'effort de compression par la tige 4 est généralement assistée par un servomoteur pneumatique 8 interposé, qui est ici optionnel.

L'invention vise en particulier à résoudre les problèmes d'encombrement, et dans ce cas le servomoteur pneumatique 8 sera absent. Par contre, si l'invention sert seulement à apporter une assistance électro-hydraulique complémentaire, en ménageant par ailleurs la consommation de puissance, le servomoteur pneumatique 8 pourra être avantageusement interposé. En pratique, qu'il soit présent ou non, on peut considérer que, notamment pour des questions de sécurité, le déplacement du piston 7 ou du moins que la pression dans le maître cylindre 2 sera très fortement lié aux déplacements de la tige de commande 4.

Autant, dans l'état de la technique, la chambre dans laquelle la pression hydraulique augmente peut être une des chambres du maître cylindre, autant dans l'invention, la chambre de pression 6 sera une chambre supplémentaire intermédiaire, située en amont du maître cylindre 9 proprement dit. Pour des raisons d'industrialisation, la chambre de pression 6 peut être réalisée en même temps, ou avec, le maître cylindre proprement dit 9. On pourrait prévoir toutefois une chambre de pression 6 indépendante, reliée hydrauliquement au maître cylindre 9. Le maître cylindre 9 peut notamment être du type tandem et comporter en plus d'un piston primaire un piston intermédiaire 10 permettant d'injecter du liquide hydraulique dans plusieurs branches indépendantes telles que 11 d'un circuit de freinage. La branche 11 est par ailleurs montrée comme aboutissant à un dispositif 12 de frein servant à freiner un disque 13 solidaire d'une roue (non représentée) du véhicule.

Très schématiquement représentée ici, la chambre 6, de préférence de forme annulaire, comporte un piston 14 annulaire. Le piston 14 est ici relié mécaniquement par un poussoir 15 à au moins un piston primaire 16 du maître cylindre 9 proprement dit. Hors assistance selon l'invention, le fonctionnement de ce dispositif pourrait être le suivant. La tige 4 déplace le piston 7 qui comprime, par l'intermédiaire de la chambre 6 remplie de liquide hydraulique, le piston 14. Ce dernier entraîne par le poussoir 15 le piston 16 et/ou le piston 10, ce qui provoque le serrage du dispositif de frein 12 sur le disque 13.

L'invention est essentiellement caractérisée par la présence d'une pompe 17 interposée dans le conduit d'alimentation 3, entre le réservoir 1 et la chambre de pression 6. La pompe 17 est mue par un moteur 18 électrique, de préférence du type à courant continu. Le moteur 18 est par exemple alimenté par une source d'énergie 19, par exemple la batterie du véhicule, et sa vitesse est contrôlée par un dispositif de commande 20 interposé sur un des brins d'alimentation électrique reliant le moteur 18 à la batterie 19. Comme on le verra par la suite, on envisage pour le moteur 18 une commande en courant. Le courant peut alors être réglé, schématiquement, avec un dispositif 20 comportant un potentiomètre en série dont le curseur est relié à une de ses bornes.

Le dispositif d'assistance de l'invention comporte également des moyens 21 pour commander la pompe en fonction d'un effort exercé sur la tige de commande. Dans un exemple, les moyens 21 comportent un circuit électronique du type à microprocesseur. Les moyens 21 comportent dans ce cas un microprocesseur 22 en relation par l'intermédiaire d'un bus 23 de données, de commandes et d'adresses, avec une interface 24, une mémoire de données 25 et une mémoire programme 26. Les moyens 21 peuvent par ailleurs être partie d'un dispositif général de commande du véhicule, le microprocesseur général 22 pouvant partager son activité entre différentes tâches, notamment celle de contrôler la pompe 18 en exécution d'un programme 27 contenu dans la mémoire 26. L'interface 24 est prévue pour délivrer des ordres O de commandes appliqués au circuit de commande 20 de la pompe 17.

Pour commander la pompe 17 en fonction d'un effort exercé sur la tige de commande 4, on prévoit de préférence un capteur 25 monté sur cette tige de commande et capable de délivrer un signal, ici E0, de mesure de l'effort exercé par le pied du conducteur sur la pédale 5. En pratique, le capteur 25 peut être un capteur de pression, par exemple à jauge de contraintes, à effet piézo-électrique, ou autre. Par ailleurs, si un servomoteur pneumatique de freinage 8 est utilisé, le capteur 25 pourra être un capteur de pression monté dans un disque de réaction interposé entre une tige de poussée du servomoteur pneumatique et des appuis exercés par la tige de commande 4 et une assistance d'un piston pneumatique de ce servomoteur. Le disque de réaction subit des efforts de compression liés à l'effort exercé par l'utilisateur. La tige de poussée de l'état de la technique prendrait ici la forme d'une tige 28, absente dans le cas présent car remplacée par la chambre 6.

Il est par ailleurs possible de se passer du piston 7 et de l'introduction de la tige 4 dans la chambre 6. Dans ce cas la tige 4 aboutirait sur un ressort, chargé uniquement de donner une résistance proportionnelle à l'enfoncement au pied de l'utilisateur pour que celui-ci dispose d'une sensation de freinage. Ce ressort délivrerait, par un capteur de mesure de sa compression, un signal correspondant à la valeur de l'effort exercé par l'utilisateur. Le signal E0 est ainsi mesuré et transmis à l'interface 24. Les circuits 21 calculent en correspondance, notamment en application du programme 27, un ordre O à appliquer au circuit 20. Dans ces conditions le moteur 18 se met à tourner, entraîne la pompe 17 et fait monter la pression dans la chambre 6 ce qui provoque le freinage.

A priori, il pourrait ne pas être nécessaire d'asservir la commande du moteur 18. En effet, compte tenu d'une mesure de l'effort E0 appliqué par l'utilisateur, et d'une connaissance de l'état du circuit de freinage au moment de cette application, il serait possible de calculer un ordre O et de compter sur la fidélité de la reproduction des actions par le moteur 18 pour que le freinage attendu se produise en correspondance. Toutefois, de manière à mieux contrôler le freinage, on prévoit avec un capteur 29 de mesurer l'action de la pompe 17. De préférence, le capteur 29 sera un capteur de mesure d'un courant lm passant dans le moteur 18. Ceci peut être obtenu simplement, et est montré ici d'une manière schématique, par l'interposition d'une résistance calibrée faible et connue 30 dans les circuits d'alimentation du moteur 18. Les différences de tension aux deux bornes de la résistance 30 forment le signal lm. Ce signal lm est également appliquée sur l'interface 24 pour être transmis au circuit 21.

De manière à maintenir la pression dans la chambre 6, même après un arrêt éventuel du moteur 18 (en fin de commande par exemple), on peut prévoir de disposer dans le conduit 3, en aval de la pompe 17 et en amont de la chambre 6, un clapet anti-retour 31 empêchant que la pression élevée régnant dans la chambre 6 puisse se réduire par une fuite inverse au travers de la pompe 17. On aurait par ailleurs pu placer le clapet anti-retour 31 entre le réservoir 1 et la pompe 17. Eventuellement, selon la technologie de la pompe 17 et la technologie du moteur 18, on peut prévoir un réducteur de vitesse entre le moteur 18 et la pompe 17 qui soit tel que, même si ce moteur 18 n'est pas alimenté, il ne puisse pas tourner à l'envers et forme en quelque sorte un clapet anti-retour en empêchant la pompe 17 de fonctionner à l'envers.

Lors d'un défreinage, lorsque l'utilisateur enlève son pied de la pédale 5 de frein, la mesure de l'effort E0 est traité par le circuit 21 pour produire un ordre V disponible à l'interface 24. Cet ordre V est utilisable pour laisser la pression décroître dans la chambre 6. Ceci peut être réalisé de plusieurs façon. De préférence, le réservoir 1 est relié à la chambre 6 par un conduit auxiliaire 32 en dérivation du conduit 3. Le conduit 32 possède par ailleurs une vanne de décharge 33 du type électrovanne. La vanne 33 reçoit l'ordre V pour s'ouvrir et laisser le liquide hydraulique contenu dans la chambre 6 retourner dans le réservoir 1. Ce retour du liquide hydraulique est par ailleurs provoqué par des ressorts de rappel (non représentés) présents sur les divers organes mécaniques entraînés par le circuit hydraulique. En variante, on pourrait prévoir de pivoter la vanne anti-retour 21 par l'ordre V, de manière à la rendre passante. Dans ce cas on choisirait une pompe 17 admettant une fuite inverse importante.

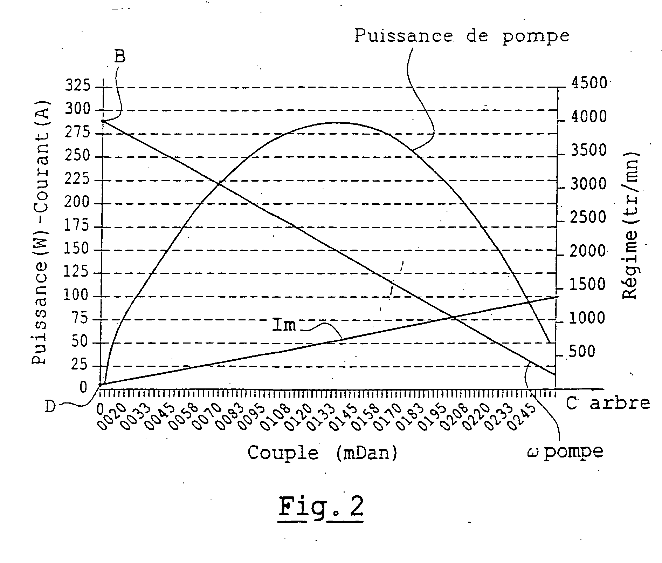

On va ici expliquer maintenant notamment à l'aide de la figure 2, le fonctionnement préféré de l'asservissement. Cet asservissement asservit l'action de la pompe 17 à l'effort E0 exercé sur la tige de commande 4. La figure 2 montre trois courbes : lm, $\omega_{pompe}$ et Puissance de pompe. Ces trois courbes sont représentées dans un référentiel comportant, en abscisses les valeurs du couple $C_{arbre}$ exercé par un arbre 34 issu du moteur 18 pour entraîner la pompe 17. Pour un moteur 18 à courant continu, on note, selon la formule 1 : $\omega_{pompe} = A \times C_{arbre} - B$, avec A négatif, que la vitesse $\omega_{pompe}$ de la pompe décroît en fonction du couple exercé par l'arbre 34. La vitesse est montrée en ordonnée en tours par minutes. Par contre le courant nécessaire pour faire tourner le moteur 18 est proportionnel à ce couple selon la formule 2 suivante : $I_{moteur} = C \times C_{arbre} + D$. Le courant est donné en ordonnée en ampères. Dans ces formules, A, B, C, et D représentent des coefficients.

En ce qui concerne la puissance de la pompe, on constate qu'elle subit une augmentation lorsque le couple augmente de 0,020 mDaN jusqu'à 0,133 mDaN, puis une décroissance jusqu'à 0,245 mDaN. En pratique, le rendement de la pompe est donné par la formule 3 :

$$\eta_{pompe} = (P_{chambre} - P_{réservoir}) \times Q_{pompe} / C_{arbre} \times \omega_{pompe} = (\eta_{volumétrique} \times \eta_{mécanique})$$

où Q est le débit de la pompe, où les rendements $\eta$ mécaniques et volumétriques sont connus, et quasi constants en fonction du débit de refoulement, et où la pression disponible dans le réservoir 1, si ce réservoir 1 est soumis à une pression, intervient comme facteur de correction du rendement. Dans ce but, le réservoir 1 pourra être muni d'un capteur, non représenté figure 1, pour délivrer un signal $P_{réservoir}$ représentatif de cette pression dans le réservoir 1.

Ces considérations amènent à disposer dans la chambre 6 d'une pression donnée par la formule 4 :

$$P_{chambre} = \eta_{pompe} \times (C_{arbre} \times \omega_{pompe} / Q_{pompe}) + P_{réservoir}.$$

Sachant que le débit réel de la pompe est donné par la formule 5 :

$$Q_{pompe\ réel} = C_{ylindrée} \times \eta_{volumétrique} \times \omega_{pompe},$$

ou encore par la formule 6 :

$$Q_{pompe\ réel} = C_{ylindrée} \times (\eta_{pompe} / \eta_{mécanique}) \times \omega_{pompe},$$

la pression dans la chambre 6 est donnée par la formule 7 :

$$P_{chambre} = (\eta_{pompe} \times (I_{moteur} - D) / C) / (C_{ylindrée} \times \eta_{volumétrique}) + P_{réservoir}$$

D'autre part $\eta_{pompe} = \eta_{volumétrique} \times \eta_{mécanique}$
Ce qui conduit à

$$P_{chambre} = (\eta_{mécanique} / C_{ylindrée}) \times (I_{moteur} - D) / C + P_{réservoir}$$

Cette explication permet d'affirmer que la pression dans la chambre 6 est, selon la formule 8 : $P_{chambre} = f(I_{moteur})$, directement proportionnelle au courant Im. Ceci s'exprime également selon la formule 9 : $I_{moteur} = f^{-1}(P_{chambre})$ en disant que le courant du moteur 18 est une fonction réciproque linéaire univoque (donc sans oscillation possible de l'asservissement) de la pression dans la chambre. En conséquence, figure 1, le programme 27 comportera une fonction 35 du type $\alpha f^{-1}$ pour convertir l'effort E0 (lui-même représentatif de la pression dans la chambre 6) en un courant 10 censé circuler dans le moteur 18 pour actionner la pompe 17. Ce courant 10 doit être comparé dans une étape de comparaison 36 au courant Im délivré par le capteur 29. Le signal d'erreur est appliqué en tant qu'ordre O au moteur 18. La fonction de transfert de ce moteur chargé par la pompe produit le courant Im mesuré.

Le choix d'un moteur à courant continu, dans lequel le couple disponible est proportionnel au courant, est donc une solution préférée car la fonction de transfert est simple. En outre un moteur à courant continu, dit aussi moteur couple, présente l'avantage de très bien supporter le blocage. Par exemple, la pompe peut alors être du type aspirante foulante (sans fuite inverse). Elle peut néanmoins aussi être du type péristaltique, à membranes ou à ailettes, ou d'une manière générale de type volumétrique. Ces trois derniers types ne provoquent pas à l'arrêt du moteur lorsque la pression dans la chambre 6 atteint la valeur désirée.

Dans le cas particulier où le piston 7 n'est pas présent (l'utilisateur ne fait que produire une consigne E0), tout l'effort de freinage est assuré par la pompe 17. On choisit alors d'une part une pression de service relativement faible, et d'autre part une dimension suffisante de la chambre 6. Celle-ci, si elle est annulaire possède un diamètre supérieur notamment aux diamètres des chambres du maître cylindre 9, tout en restant d'une taille bien inférieure au diamètre d'un servomoteur pneumatique. Si la chambre 6 n'est pas annulaire, on s'arrange pour que la surface d'appui sur le piston 14 soit supérieure aux surfaces des pistons 10 ou 16. Avec ces choix, on peut arriver avec le piston 14 à actionner efficacement les pistons 16 et 10 du maître cylindre 9.

En outre, il est possible de mesurer non seulement l'effort E0, mais également le gradient temporel de cet effort E0. On peut alors même durcir l'action de l'asservissement en modifiant la fonction $f^{-1}$. On pourrait ainsi notamment tenir compte d'un freinage brusque.

**Revendications**

1. Dispositif d'assistance de freinage comportant un réservoir (1) de liquide hydraulique, un maître cylindre (9), un conduit (3) d'alimentation reliant le maître cylindre au réservoir, et une tige (4) de commande pour exercer un effort (E0) de compression du liquide hydraulique dans le maître cylindre, une chambre (6) de pression, en amont du maître cylindre pour un écoulement du liquide hydraulique du réservoir vers (11) des freins (12) d'un véhicule, une pompe hydraulique (17) interposée dans le conduit entre le réservoir et la chambre de pression, un moteur électrique (18) d'entraînement de la pompe hydraulique (17) et des moyens (18-27) pour commander la pompe en fonction d'un effort exercé sur la tige de commande, **caractérisé ce que** les moyens pour commander la pression de la pompe comportent un capteur (25) pour mesurer l'effort exercé sur la tige de commande, un capteur (30) pour mesurer l'action de la pompe, et un asservissement (36) pour asservir l'action de la pompe à l'effort exercé sur la tige de commande et en ce que ledit asservissement génère un courant (IO) censé circuler dans le moteur (18) qui est une fonction $\alpha f^{-1}$ de l'effort E0 exercé par le pied du conducteur sur une pédale (5), $f^{-1}$ étant une fonction liant l'intensité du courant du moteur $I_{moteur}$ à la pression $P_{chambre}$ de la chambre (6) de pression.

2. Dispositif selon la revendication 1, **caractérisé en ce que** la pompe est mue par un moteur (18) à courant continu et **en ce que** le capteur pour mesurer l'action de la pompe est un capteur de mesure du courant (Im) dans ce moteur à courant continu.

3. Dispositif selon l'une des revendications 1 à 2, **caractérisé en ce que** le conduit d'alimentation comporte un clapet anti-retour (31).

4. Dispositif selon la revendication 3, **caractérisé en ce que** le clapet anti-retour est situé entre la pompe et la chambre de pression.

5. Dispositif selon l'une des revendications 1 à 4, **caractérisé en ce qu'**il comporte une vanne (33) de décharge placée dans un conduit (32) auxiliaire en dérivation allant du réservoir à la chambre de pression du maître cylindre.

6. Dispositif selon l'une des revendications 1 à 5, **caractérisé en ce que** le maître cylindre est double (10, 16).

7. Dispositif selon l'une des revendications 1 à 6, **caractérisé en ce que** la chambre de pression comporte une surface d'appui d'un piston (14) plus grande qu'une surface d'appui d'un piston (10, 16) du maître cylindre.

**Claims**

1. Brake booster device comprising a reservoir (1) of hydraulic fluid, a master cylinder (9), a feed pipe (3) connecting the master cylinder to the reservoir, and a control rod (4) for exerting a force (E0) to compress the hydraulic fluid in the master cylinder, a pressure chamber (6) upstream of the master cylinder for a flow of hydraulic fluid from the reservoir to (11) brakes (12) of a vehicle, a hydraulic pump (17) fitted in the pipe between the reservoir and the pressure chamber, an electric motor (18) driving the hydraulic pump (17) and means (18-27) for operating the pump on the basis of a force exerted on the control rod **characterized in that** the means for controlling the pressure of the pump comprise a sensor (25) for measuring the force exerted on the control rod, a sensor (30) for measuring the action of the pump, and feedback control (36) to slave the action of the pump to the force exerted on the control rod and **in that** said feedback control (36) generate a supposed current (I0) circulate in the motor (18) which is a function $\alpha f^{-1}$ of the force E0 exerted by the foot of the driver on the pedal (5) $f^{-1}$ being a function linking the strength of the current of the motor $I_{motor}$ to the pressure $P_{chamber}$ of the pressure chamber (6).

2. Device according to Claim 1, **characterized in that** the pump is driven by a DC motor (18) and **in that** the sensor for measuring the action of the pump is a sensor for measuring the current (Im) in this DC motor.

3. Device according to one of Claims 1 to 2, **characterized in that** the feed pipe comprises a nonreturn valve (31).

**4.** Device according to Claim 3, **characterized in that** the nonreturn valve is situated between the pump and the pressure chamber.

**5.** Device according to one of Claims 1 to 4, **characterized in that** it comprises a relief valve (33) placed in an auxiliary branched-off pipe (32) running from the reservoir to the pressure chamber of the master cylinder.

**6.** Device according to one of Claims 1 to 5, **characterized in that** the master cylinder is doubled (10, 16).

**7.** Device according to one of Claims 1 to 6, **characterized in that** the pressure chamber has a surface area for the bearing of a piston (14) that is larger than the surface area for the bearing of a piston (10, 16) of the master cylinder.

**Patentansprüche**

**1.** Bremsunterstützungsvorrichtung mit einem Hydraulikfluidbehälter (1), einem Hauptzylinder (9), einer Versorgungsleitung (3), die den Hauptzylinder mit dem Behälter verbindet, einer Steuerstange (4) zum Ausüben einer Kompressionskraft (E0) auf das Hydraulikfluid im Hauptzylinder, einer Druckkammer (6) stromaufwärts des Hauptzylinders für eine Hydraulikfluidströmung vom Behälter zu (11) Bremsen (12) eines Fahrzeugs, einer Hydraulikpumpe (17), die in der Leitung zwischen dem Behälter und der Druckkammer angeordnet ist, einem Elektromotor (18) zum Antreiben der Hydraulikpumpe (17) und Mitteln (18-27) zur Steuerung der Pumpe in Abhängigkeit von einer auf die Steuerstange ausgeübten Kraft, **dadurch gekennzeichnet, dass** die Mittel zur Steuerung des Drucks der Pumpe einen Sensor (25) zur Messung der auf die Steuerstange ausgeübten Kraft, einen Sensor (30) zur Messung der Wirkung der Pumpe und ein Regelungssystem (36) aufweisen, um die Wirkung der Pumpe entsprechend der auf die Steuerstange ausgeübten Kraft zu regeln, und das Regelungssystem einen Strom (I0) erzeugt, der im Motor (18) fließen soll und eine Funktion $\alpha f^{-1}$ der Kraft E0 ist, die von dem Fuß des Fahrers auf ein Pedal (5) ausgeübt wird, wobei $f^{-1}$ eine Funktion ist, die die Motorstromstärke $I_{Motor}$ an den Druck $P_{Kammer}$ der Druckkammer (6) knüpft.

**2.** Vorrichtung nach Anspruch 1, **dadurch gekennzeichnet, dass** die Pumpe von einem Gleichstrommotor (18) bewegt wird und der Sensor zur Messung der Wirkung der Pumpe ein Sensor zur Messung des Stroms (Im) in diesem Gleichstrommotor ist.

**3.** Vorrichtung nach einem der Ansprüche 1 bis 2, **dadurch gekennzeichnet, dass** die Versorgungsleitung eine Rückschlagklappe (31) aufweist.

**4.** Vorrichtung nach Anspruch 3, **dadurch gekennzeichnet, dass** die Rückschlagklappe zwischen der Pumpe und der Druckkammer angeordnet ist.

**5.** Vorrichtung nach einem der Ansprüche 1 bis 4, **dadurch gekennzeichnet, dass** sie ein Auslassventil (33) aufweist, das in einer zusätzlichen Zweigleitung (32) angeordnet ist, die sich von dem Behälter zur Druckkammer des Hauptzylinders erstreckt.

**6.** Vorrichtung nach einem der Ansprüche 1 bis 5, **dadurch gekennzeichnet, dass** der Hauptzylinder ein Tandemhauptzylinder (10, 16) ist.

**7.** Vorrichtung nach einem der Ansprüche 1 bis 6, **dadurch gekennzeichnet, dass** die Druckkammer eine Fläche für die Anlage eines Kolbens (14) aufweist, die größer ist als eine Fläche für die Anlage eines Kolbens (10, 16) des Hauptzylinders.

Fig.1

Fig. 2

**RÉFÉRENCES CITÉES DANS LA DESCRIPTION**

**Documents brevets cités dans la description**

- DE 19632130 A